# EUROPEAN PATENT APPLICATION

(11) **EP 1 536 253 A1**
(43) Date of publication of application: **01.06.2005**
(21) Application number: 04255165.5
(22) Date of filing: 26.08.2004
(51) Int. Cl.: G02B 6/12

(54) **Method of manufacturing a branch optical waveguide**

(30) Priority: 27.11.2003 JP 2003397472
(71) Applicant: Mitsumi Electric Co., Ltd., Tama-shi, Tokyo 206-8567 (JP)
(72) Inventor: Ishikawa, Yoshihiro, Tama-Shi Tokyo 206-8567 (JP)
(74) Representative: Eddowes, Simon

(57) **Abstract**

A method of manufacturing a branch optical waveguide (42) is disclosed. According to the method, a resist pattern (12A) is formed by performing exposure using an exposure mask (22A), and a core (44) is formed by performing etching on a layer (10) of a polymer resin material using the resist pattern (12A) as a mask. As a result, the branch optical waveguide (42) is manufactured. In this method, the exposure mask (22A) includes a main body mask part (22Aa) and first and second branch mask parts (22Ab,22Ac) branching off therefrom at a branch point part (22Ad). The branch point part (22Ad) has a shape where first, second, and third linear edge parts (51,52,53) connect the edge part (22Ab1) of the first branch mask part (22Ab) and the edge part (22Ac1) of the second branch mask part (22Ac) in a trapezoidal, triangular or arc-shaped manner.

## Description

### BACKGROUND OF THE INVENTION

### 1. Field of the Invention

The present invention relates generally to methods of manufacturing a branch optical waveguide, and more particularly to a method of manufacturing a branch optical waveguide of a polymer resin material, using lamination, photolithography, and reactive ion etching (RIE).

### 2. Description of the Related Art

Y-branch optical waveguide devices with a Y-branch optical waveguide using a polymer resin material have lower light propagation characteristics, but have the advantages of far better productivity and far lower manufacturing costs than quartz branch optical waveguide devices. Accordingly, branch optical waveguide devices are often used as optical module components.

A description is given of a process for manufacturing a conventional branch optical waveguide device using a polymer resin material. According to actual manufacturing, multiple branch optical waveguides are formed on a silicon wafer in a matrix manner using lamination and photolithography, and the silicon wafer is scribed into pieces at the end. Here, a description is given in such a way as to form a single branch optical waveguide.

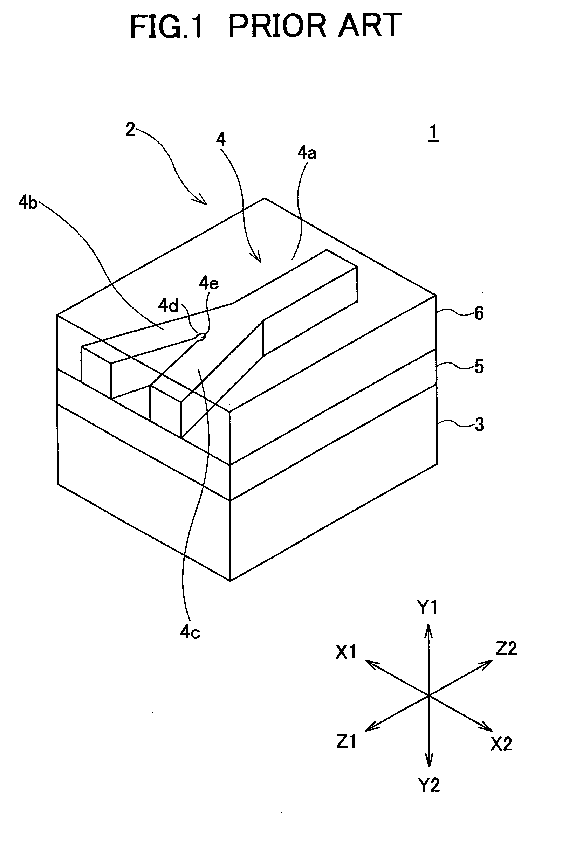

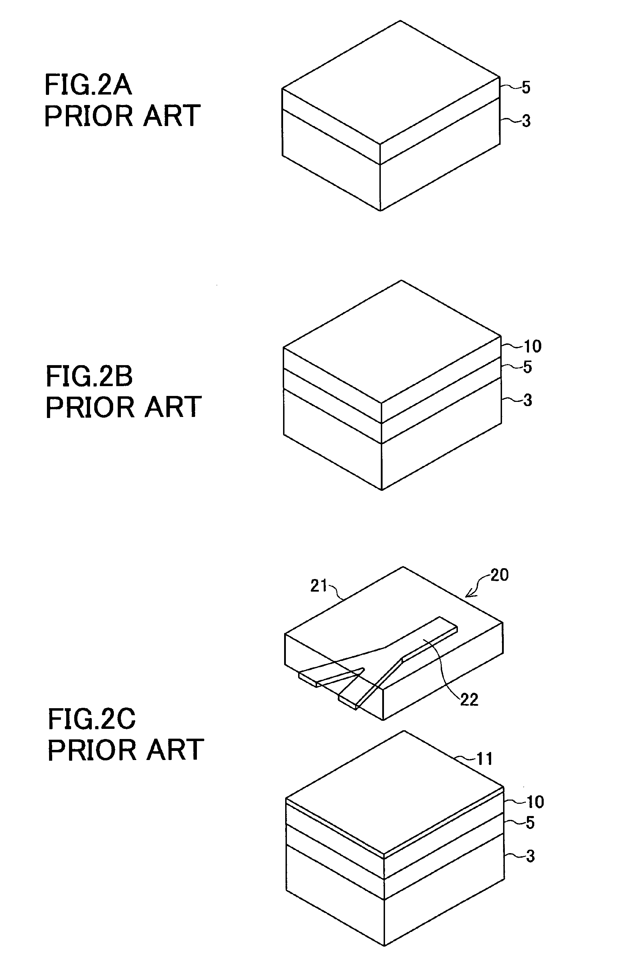

FIG. 1 is a perspective view of a Y-branch optical waveguide device 1 manufactured through processes shown in FIGS. 2A through 2G. In FIG. 1, Z1-Z2, X1-X2, and Y1-Y2 indicate the directions of length, width, and thickness (height), respectively, of the Y-branch optical waveguide device 1. The Y-branch optical waveguide device 1 includes a Y-branch optical waveguide 2 made of a polymer resin material and a silicon substrate 3. The Y-branch optical waveguide 2 is formed on the upper surface of the silicon substrate 3. The Y-branch optical waveguide 2 includes a core 4 made of a polymer resin material such as a fluorinated polyimide resin and lower and upper clad layers 5 and 6 surrounding the core 4. The lower and upper clad layers 5 and 6 are also made of a fluorinated polyimide resin. The core 4, which has a Y-letter shape, includes an entrance-side core 4a and two branch cores 4b and 4c that branch off therefrom. In FIG. 1, the core 4 is shown with solid lines for convenience of description.

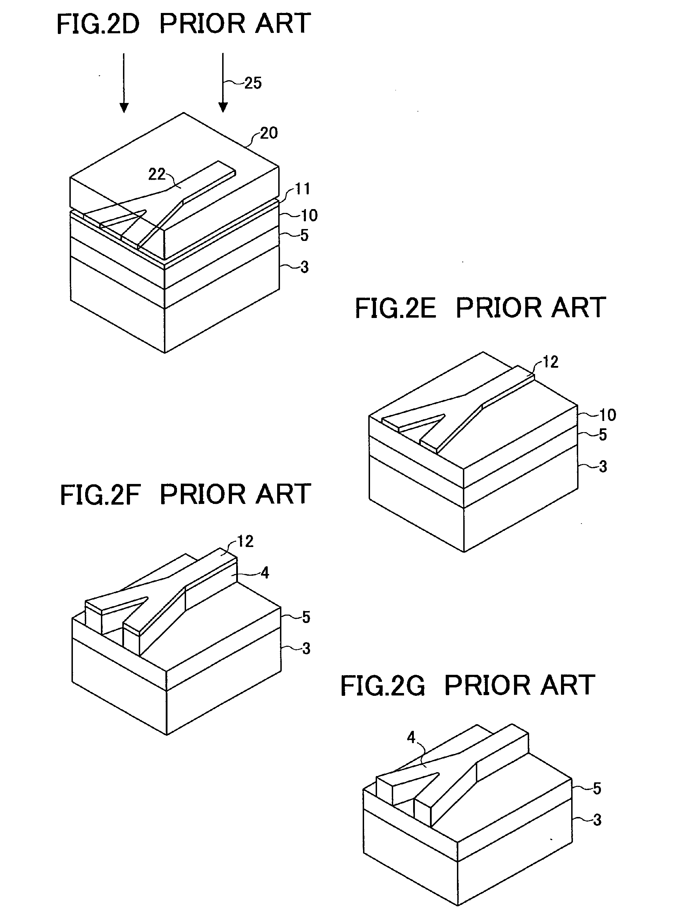

First, as shown in FIG. 2A, a fluorinated polyimide resin having a refractive index of n1 is applied on the surface of the silicon substrate 3 so that the lower clad layer 5 is formed. Then, as shown in FIG. 2B, a fluorinated polyimide resin having a refractive index of n2 (> n1) is applied on the lower clad layer 5 so that a core layer 10 is formed. Then, as shown in FIG. 2C, a resist layer 11 containing silicon is applied and formed on the core layer 10. A mask member 20 includes a quartz plate 21 and a Y-shaped mask pattern 22 of, for instance, a chromium film that blocks ultraviolet rays, formed on the lower surface of the quartz plate 21. The mask pattern 22 is shown with solid lines for convenience of description. Next, as shown in FIG. 2D, the mask member 20 for exposure is adhered onto the resist layer 11, and is exposed to ultraviolet rays 25 of a wavelength of approximately 400 nm so as to develop the resist layer 11. Then, cleaning is performed so that as shown in FIG. 2E, a resist mask 12 for RIE is formed. Next, RIE is performed to remove the core layer 10 so that the Y-shaped core 4 is formed as shown in FIG. 2F. Next, as shown in FIG. 2G, the resist mask 12 is removed. Finally, a fluorinated polyimide resin having the refractive index of n1 is applied so that the upper clad layer 6 is formed to cover the core 4. As a result, the Y-branch optical waveguide device 1 shown in FIG. 1 is manufactured. Such an optical waveguide manufacturing method is disclosed in Japanese Laid-Open Patent Application No. 7-92338.

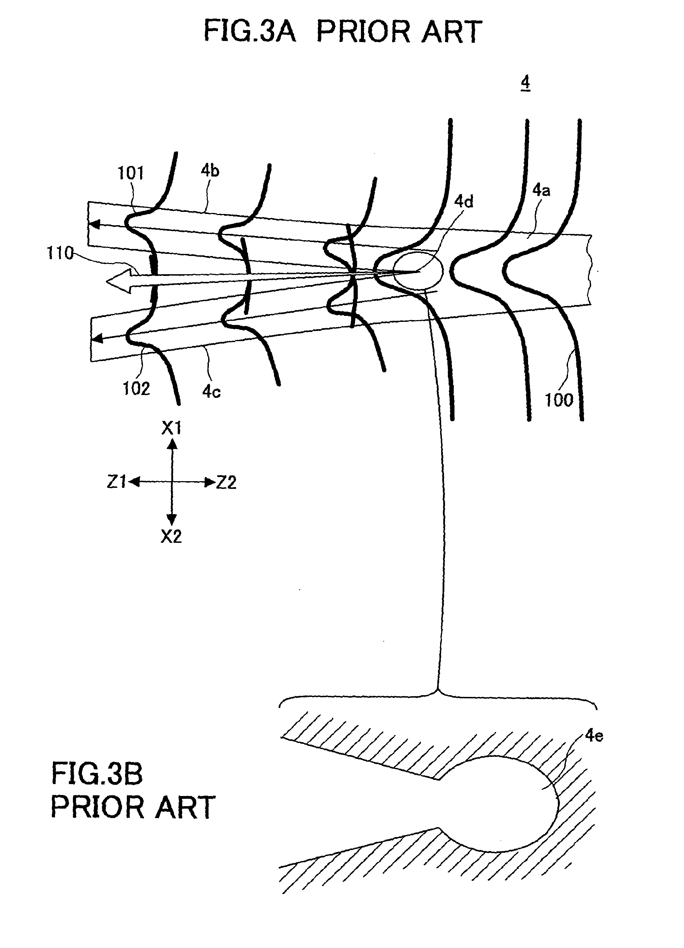

As shown in FIG. 3A, light 101, which is substantially one half of light 100 that enters the entrance-side core 4a and is propagated therethrough, is propagated through the branch core 4b, and remaining light 102 is propagated through the branch core 4c.

FIG. 3B is an enlarged view of a branch point part 4d of the core 4 shown in FIG. 3A, which is the base part of the two branch cores 4b and 4c. As shown in FIG. 3B, the branch point part 4d includes a substantially elliptic part 4e, which is open as if scooped out. Accordingly, the light 100 propagated through the entrance-side core 4a is subject to leaking, so that an unignorable portion of the light 100 leaks out from the branch point part 4d as indicated by reference numeral 110, thus resulting in radiation loss. Reference numeral 110 refers to radiation loss light. Therefore, the conventional Y-branch optical waveguide device 1 has a problem in that radiation loss at the branch point part 4d is great and the intensity of the light 101 and 102 propagated through the branch cores 4b and 4c, respectively, is reduced due to the radiation loss.

Here, the formation of the shape of the base of the branch cores 4b and 4c is discussed.

The core 4 is formed by RIE as shown in FIG. 2F. The shape of the base of the branch cores 4b and 4c is substantially determined by the shape of the resist mask 12, and, traced back further, by the shape of the Y-shaped exposure mask pattern 22 of the mask member 20, the mask pattern 22 being formed of a chromium film.

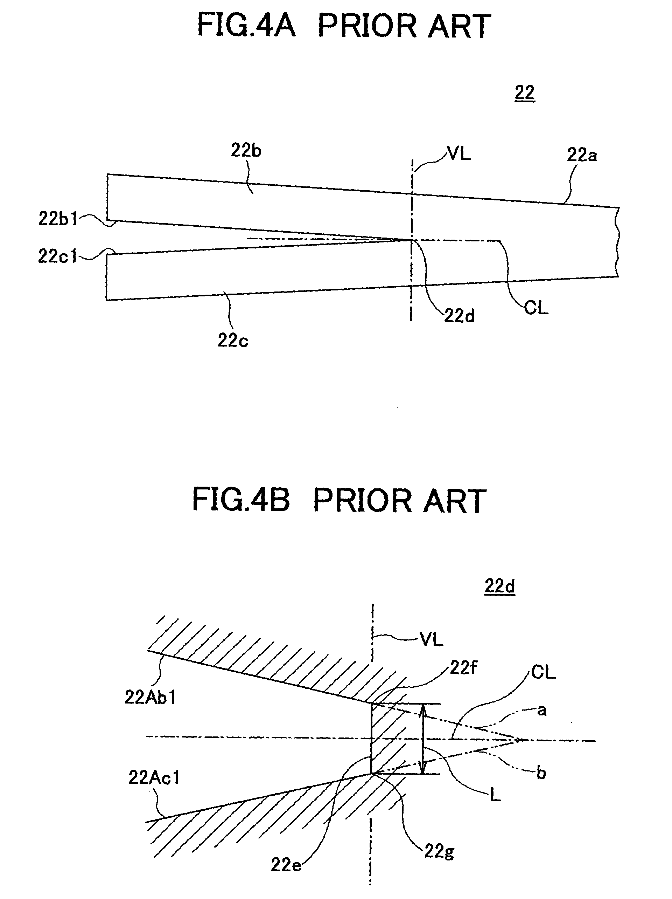

FIG. 4A is a diagram showing the conventional exposure mask pattern 22, and FIG. 4B is an enlarged view of a branch point part 22d of the exposure mask pattern 22.

Referring to FIG. 4A, the exposure mask pattern 22 includes a main body mask part 22a and first and second branch mask parts 22b and 22c branching off from the main body mask part 22a. Referring further to FIG. 4B, the branch point part 22d of the first and second branch mask parts 22b and 22c has a shape where an edge part 22b1 of the first branch mask part 22b and an edge part 22c1 of the second branch mask part 22c are connected by a line VL perpendicular to the center line CL of the exposure mask pattern 22. The branch point part 22d of the first and second branch mask parts 22b and 22c has a shape determined by the edge part 22b1, the edge part 22c1, and a linear edge part 22e. The length L of the edge part 22e is a few microns. The branch point part 22d includes a corner part 22f formed by the edge part 22b1 and the edge part 22e and a corner part 22g formed by the edge part 22c1 and the edge part 22e. When the resist layer 11 is subjected to exposure using the exposure mask pattern 22 having the corner parts 22f and 22g in a small area, the light of the ultraviolet rays 25 radiated on the edge part 22b1 side and the light of the ultraviolet rays 25 radiated on the edge part 22e side interfere with each other or diffuse in the corner part 22f. The same phenomenon also occurs in the corner part 22g. As a result, the ultraviolet rays 25 go around the corner parts 22f and 22g to their outside (the outside of a predetermined exposure area) so as to expose the resist layer 11 to light. Consequently, the core 4 has the substantially elliptic part 4e shown in FIG. 3B.

An exposure mask pattern more conventional than the exposure mask pattern 22 includes a triangle having an extremely small vertical angle formed by the edge part 22b1 and the edge part 22c1 being extended to meet each other as indicated by two-dot chain lines a and b, respectively, as shown in FIG. 4B. In the case of employing this exposure mask pattern, the light intensity of ultraviolet rays is reduced in the area of the triangle compared with the other area, thus resulting in a resist mask whose branch point part has an ill-defined outline. As a result, the core also has a branch point part with an ill-defined outline, thus further increasing radiation loss.

### SUMMARY OF THE INVENTION

Accordingly, it is a general object of the present invention to provide a method of manufacturing a branch optical waveguide in which the above-described disadvantage is eliminated.

A more specific object of the present invention is to provide a method of manufacturing a branch optical waveguide in which radiation loss at a branch point part is reduced, and an exposure mask employed in the method.

The above objects of the present invention are achieved by a method of manufacturing a branch optical waveguide, the method forming a resist pattern by performing exposure using an exposure mask, the method forming a core by performing etching on a layer of a polymer resin material using the resist pattern as a mask, thereby manufacturing the branch optical waveguide, wherein: the exposure mask includes a main body mask part and first and second branch mask parts branching off therefrom at a branch point part; and the branch point part has a shape where first, second, and third linear edge parts connect an edge part of the first branch mask part and an edge part of the second branch mask part in a trapezoidal manner.

The above objects of the present invention are also achieved by a method of manufacturing a branch optical waveguide, the method forming a resist pattern by performing exposure using an exposure mask, the method forming a core by performing etching on a layer of a polymer resin material using the resist pattern as a mask, thereby manufacturing the branch optical waveguide, wherein: the exposure mask includes a main body mask part and first and second branch mask parts branching off therefrom at a branch point part; and the branch point part has a shape where an edge part curved like an arc connects an edge part of the first branch mask part and an edge part of the second branch mask part.

The above objects of the present invention are also achieved by a method of manufacturing a branch optical waveguide, the method forming a resist pattern by performing exposure using an exposure mask, the method forming a core by performing etching on a layer of a polymer resin material using the resist pattern as a mask, thereby manufacturing the branch optical waveguide, wherein: the exposure mask includes a main body mask part and first and second branch mask parts branching off therefrom at a branch point part; and the branch point part has a shape where first and second linear edge parts connect an edge part of the first branch mask part and an edge part of the second branch mask part in a triangular manner.

The above objects of the present invention are also achieved by an exposure mask used in a process for forming a resist pattern on an upper surface of a layer of a polymer resin material by exposure, the resist pattern being used for performing etching on the layer of the polymer resin material so as to form a core including an entrance-side core and a plurality of branch cores branching off therefrom, the exposure mask including: a main body mask part; and first and second branch mask parts branching off from the main body mask part at a branch point part, wherein the branch point part has a shape where first, second, and third linear edge parts connect an edge part of the first branch mask part and an edge part of the second branch mask part in a trapezoidal manner.

The above objects of the present invention are also achieved by an exposure mask used in a process for forming a resist pattern on an upper surface of a layer of a polymer resin material by exposure, the resist pattern being used for performing etching on the layer of the polymer resin material so as to form a core including an entrance-side core and a plurality of branch cores branching off therefrom, the exposure mask including: a main body mask part; and first and second branch mask parts branching off from the main body mask part at a branch point part, wherein the branch point part has a shape where an edge part curved like an arc connects an edge part of the first branch mask part and an edge part of the second branch mask part.

The above objects of the present invention are also achieved by an exposure mask used in a process for forming a resist pattern on an upper surface of a layer of a polymer resin material by exposure, the resist pattern being used for performing etching on the layer of the polymer resin material so as to form a core including an entrance-side core and a plurality of branch cores branching off therefrom, the exposure mask including: a main body mask part; and first and second branch mask parts branching off from the main body mask part at a branch point part, wherein the branch point part has a shape where first and second linear edge parts connect an edge part of the first branch mask part and an edge part of the second branch mask part in a triangular manner.

According to the present invention, an exposure mask is employed that includes a main body mask part and first and second branch mask parts branching off therefrom at a branch point part having a shape where three linear edge parts connect the edge part of the first branch mask part and the edge part of the second branch mask part in a trapezoidal manner. The branch point part may alternatively have a shape where an edge part curved like an arc connects the edge part of the first branch mask part and the edge part of the second branch mask part. The branch point part may alternatively have a shape where two linear edge parts connect the edge part of the first branch mask part and the edge part of the second branch mask part in a triangular manner. As a result, it is possible to form a core whose branch point part does not include a substantially elliptic part that is open as if scooped out, and has a shape close to an ideal shape. Accordingly, it is possible to manufacture a branch optical waveguide having the characteristic of reduced radiation loss compared with a conventional one.

### BRIEF DESCRIPTION OF THE DRAWINGS

Other objects, features and advantages of the present invention will become more apparent from the following detailed description when read in conjunction with the accompanying drawings, in which:
FIG. 1 is a perspective view of a Y-branch optical waveguide device manufactured by a conventional Y-branch optical waveguide device manufacturing method;
FIGS. 2A through 2G are diagrams showing a process for manufacturing the Y-branch optical waveguide device of FIG. 1;
FIGS. 3A and 3B are diagrams showing a core of the Y-branch optical waveguide device of FIG. 1;
FIGS. 4A and 4B are diagrams showing a conventional exposure mask pattern used in the manufacturing of the Y-branch optical waveguide device of FIG. 1;
FIG. 5 is perspective view of a Y-branch optical waveguide device manufactured by a Y-branch optical waveguide device manufacturing method according to an embodiment of the present invention;
FIGS. 6A and 6B are diagrams showing a core of the Y-branch optical waveguide device according to the embodiment of the present invention;
FIGS. 7A through 7G are diagrams showing a process for manufacturing the Y-branch optical waveguide device according to the embodiment of the present invention;
FIGS. 8A and 8B are diagrams showing an exposure mask pattern used in the manufacturing of the Y-branch optical waveguide device according to the embodiment of the present invention;
FIGS. 9A and 9B are diagrams showing a resist mask formed using the exposure mask pattern according to the embodiment of the present invention;
FIGS. 10A and 10B are diagrams showing a first variation of the exposure mask pattern used in the manufacturing the Y-branch optical waveguide device according to the embodiment of the present invention; and
FIGS. 11A and 11B are diagrams showing a second variation of the exposure mask pattern used in the manufacturing of the Y-branch optical waveguide device according to the embodiment of the present invention.

### DETAILED DESCRIPTION OF THE PREFERRED EMBODIMENTS

A description is given below, with reference to the accompanying drawings, of an embodiment of the present invention.

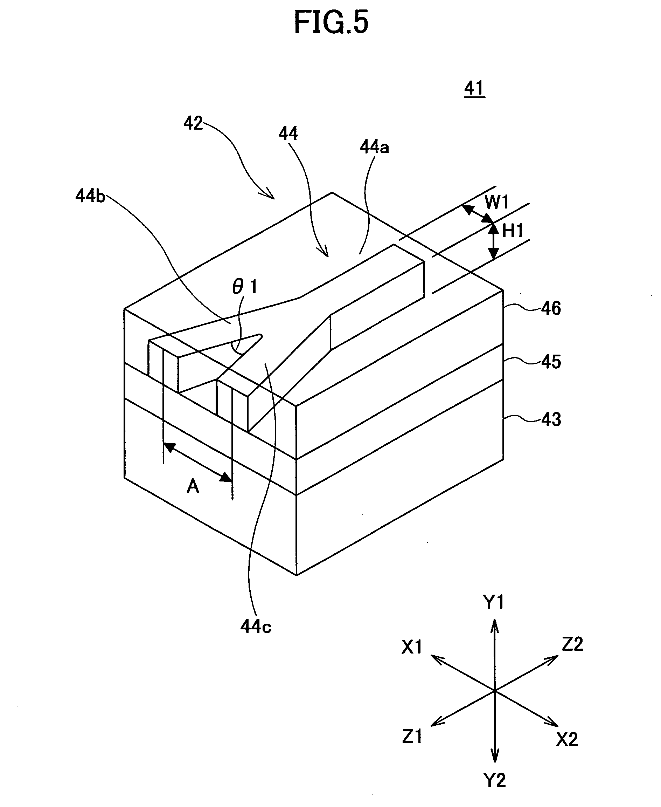

FIG. 5 is a perspective view of a Y-branch optical waveguide device 41 manufactured by a Y-branch optical waveguide device manufacturing method according to the embodiment of the present invention. In FIG. 5, Z1-Z2, X1-X2, and Y1-Y2 indicate the directions of length, width, and thickness (height), respectively, of the Y-branch optical waveguide device 41. The Y-branch optical waveguide device 41 includes a Y-branch optical waveguide 42 made of a polymer resin material and a silicon substrate 43. The Y-branch optical waveguide 42 is formed on the upper surface of the silicon substrate 43. The Y-branch optical waveguide 42 includes a core 44 made of, for instance, a fluorinated polyimide resin having a refractive index of n2 and lower and upper clad layers 45 and 46 surrounding the core 44. The lower and upper clad layers 45 and 46 are made of a fluorinated polyimide resin having a refractive index of n1 (< n2). The core 44, which has a Y-letter shape, includes an entrance-side core 44a and two branch cores 44b and 44c that branch off therefrom. In FIG. 5, the core 44 is shown with solid lines for convenience of description. The entrance-side core 44a and the branch cores 44b and 44c are fine, each having a width W1 of approximately 5 µm and a height H1 of approximately 5 µm, and are for a single mode. The distance A between the branch cores 44b and 44c at the Z1 end is narrow, being approximately 125-250 µm. A branch angle θ1 is set to 0.5-3°, thus being extremely small.

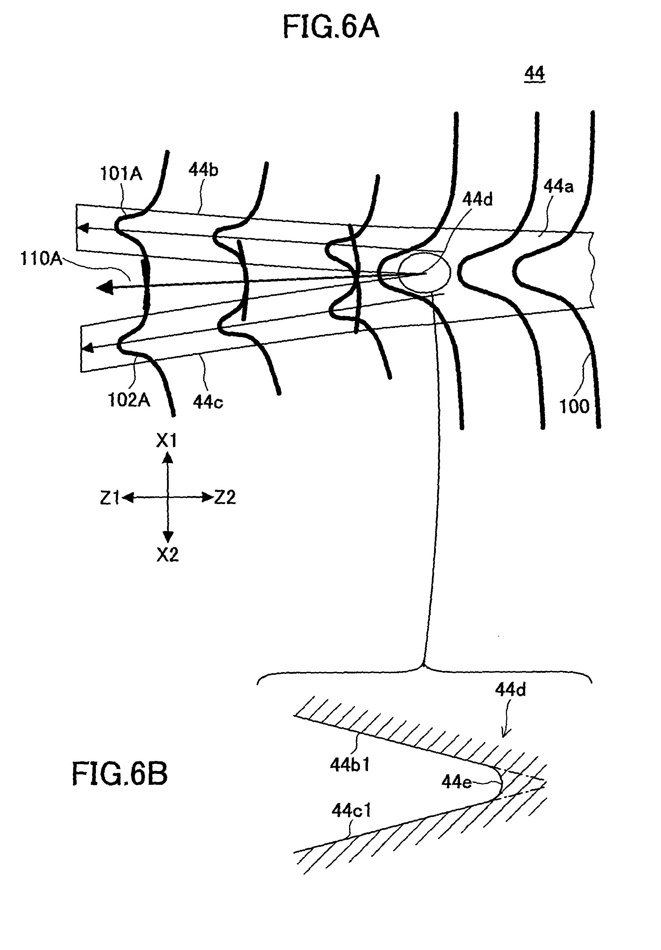

As shown in FIG. 6A, light 101A, which is substantially one half of the light 100 that enters the entrance-side core 44a and is propagated therethrough, is propagated through the branch core 44b, and remaining light 102A is propagated through the branch core 44c.

FIG. 6B is an enlarged view of a branch point part 44d of the core 44 shown in FIG. 6A, which is the base part of the two branch cores 44b and 44c. As shown in FIG. 6B, the branch point part 44d has a shape where the branch cores 44b and 44c have respective inner edge parts 44b1 and 44c1 thereof connected by an arcuate part 44e. Accordingly, the light 100 propagated through the entrance-side core 44a is less likely to leak than conventionally, so that radiation loss light 110A leaking out from the branch point part 44d is less than the conventional radiation loss light 110 (FIG. 3A). Accordingly, the Y-branch optical waveguide device 41 has the characteristic of reduced radiation loss at the branch point part 44d compared with the conventional Y-branch optical waveguide device 1 (FIG. 1), and propagates the lights 101A and 102A of higher intensity than conventionally through the branch cores 44b and 44c, respectively.

Next, a description is given of a process for manufacturing the Y-branch optical waveguide device 41. According to actual manufacturing, multiple branch optical waveguides are formed on a silicon wafer in a matrix manner using lamination and photolithography, and the silicon wafer is scribed into pieces at the end. Here, a description is given in such a way as to form a single branch optical waveguide.

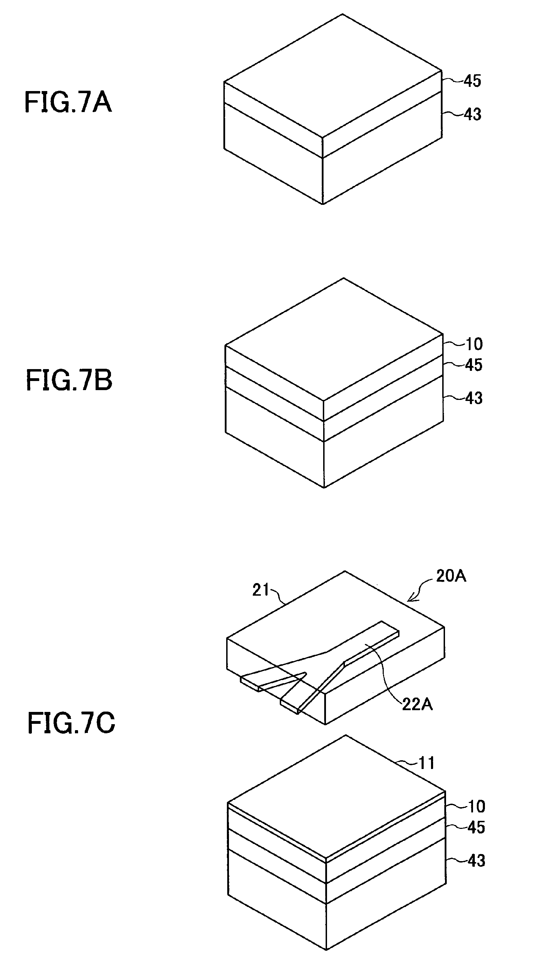

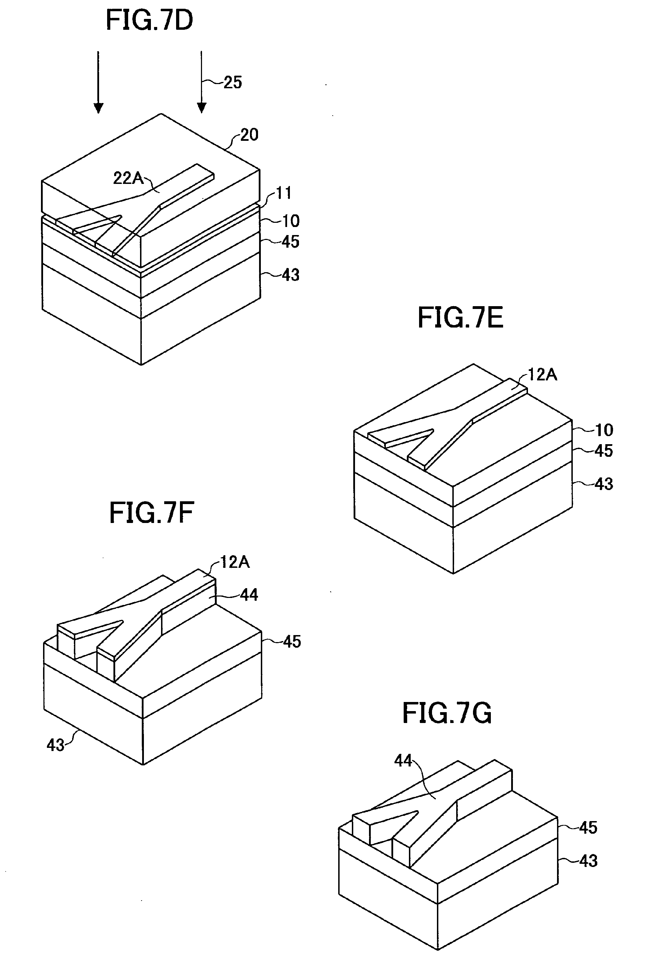

First, as shown in FIG. 7A, a fluorinated polyimide resin having a refractive index of n1 is applied on the surface of the silicon substrate 43 so that the lower clad layer 45 is formed. Then, as shown in FIG. 7B, a fluorinated polyimide resin having a refractive index of n2 (> n1) is applied on the lower clad layer 45 so that the core layer 10 is formed. Then, as shown in FIG. 7C, the resist layer 11 containing silicon is formed on the core layer 10. A mask member 20A includes the quartz plate 21 and a Y-shaped exposure mask pattern 22A (an exposure mask) of a chromium film formed on the lower surface of the quartz plate 21. The mask pattern 22A is shown with solid lines for convenience of description. Next, as shown in FIG. 7D, the mask member 20A is adhered onto the resist layer 11, and is exposed to the ultraviolet rays 25 of a wavelength of approximately 400 nm so as to develop the resist layer 11. Then, cleaning is performed so that as shown in FIG. 7E, a resist mask 12A for RIE is formed. Next, RIE is performed to remove the core layer 10 so that the core 44 is formed as shown in FIG. 7F. Next, as shown in FIG. 7G, the resist mask 12A is removed. Finally, a fluorinated polyimide resin having the refractive index of n1 is applied so that the upper clad layer 46 is formed to cover the core 44. As a result, the Y-branch optical waveguide device 41 shown in FIG. 5 is manufactured.

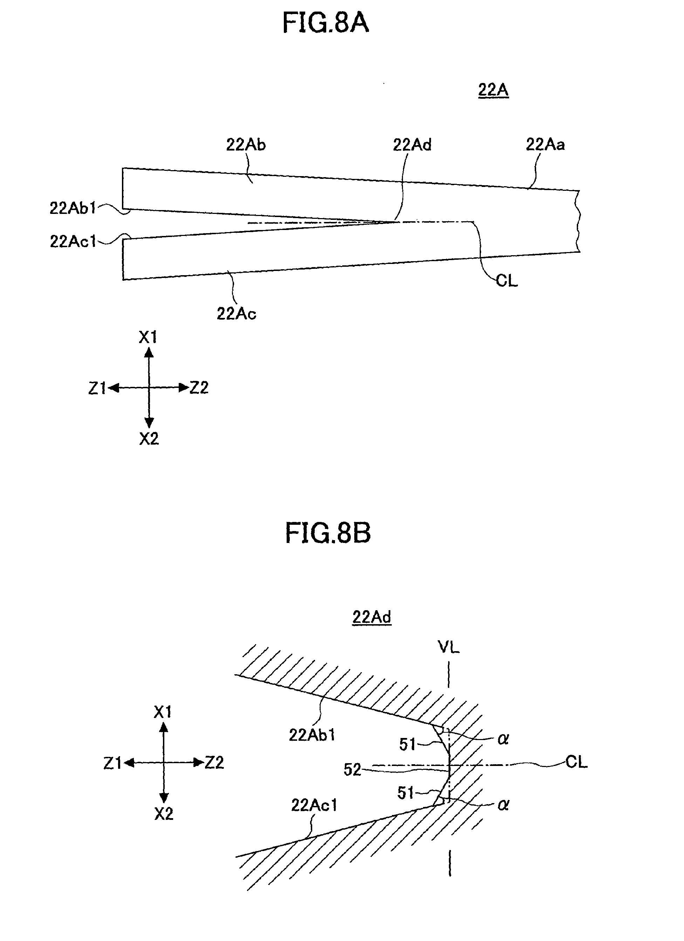

FIG. 8A shows the exposure mask pattern 22A, and FIG. 8B is an enlarged view of a branch point part 22Ad of the exposure mask pattern 22A.

The exposure mask pattern 22A includes a main body mask part 22Aa and first and second branch mask parts 22Ab and 22Ac branching off from the main body mask part 22Aa. The branch point part 22Ad of the first and second branch mask parts 22Ab and 22Ac has a shape where linear edge parts 51, 52, and 53 connect an edge part 22Ab1 of the first branch mask part 22Ab and an edge part 22Ac1 of the second branch mask part 22Ac in a trapezoidal manner, or in such a manner as to form a trapezoidal shape therebetween.

That is, in the branch point part 22Ad, the edge connecting the edge parts 22Ab1 and 22Ac1 is defined by the edge parts 51, 52, and 53, which are connected so as to form a trapezoidal shape that is open in a direction away from the main body mask part 22Aa. In other words, the closed end of the space between the edge parts 22Ab1 and 22Ac1 is defined by the edge parts 51, 52, and 53, which are connected so as to form a trapezoidal shape with a line connecting the connection of the edge parts 22Ab1 and 51 and the connection of the edge parts 22Ac1 and 52, the trapezoidal shape being formed on the main body mask part 22Aa side of the line.

The edge part 51 is inclined clockwise at an angle α to the edge part 22Ab1. The edge part 52 is inclined counterclockwise at the angle α to the edge part 22Ac1. The edge part 53 is an edge part along a line VL perpendicular to the center line CL of the exposure mask pattern 22A, and corresponds to part of the edge part 22e shown in FIG. 4B. In FIG. 8B, the shape of the branch point part 22d shown in FIG. 4B is indicated by two-dot chain lines.

Compared with the branch point part 22d shown in FIG. 4B, the branch point part 22Ad has a shape where its part corresponding to the corner parts 22f and 22g of FIG. 4B and their vicinity in which no chromium film is formed is filled with a chromium film.

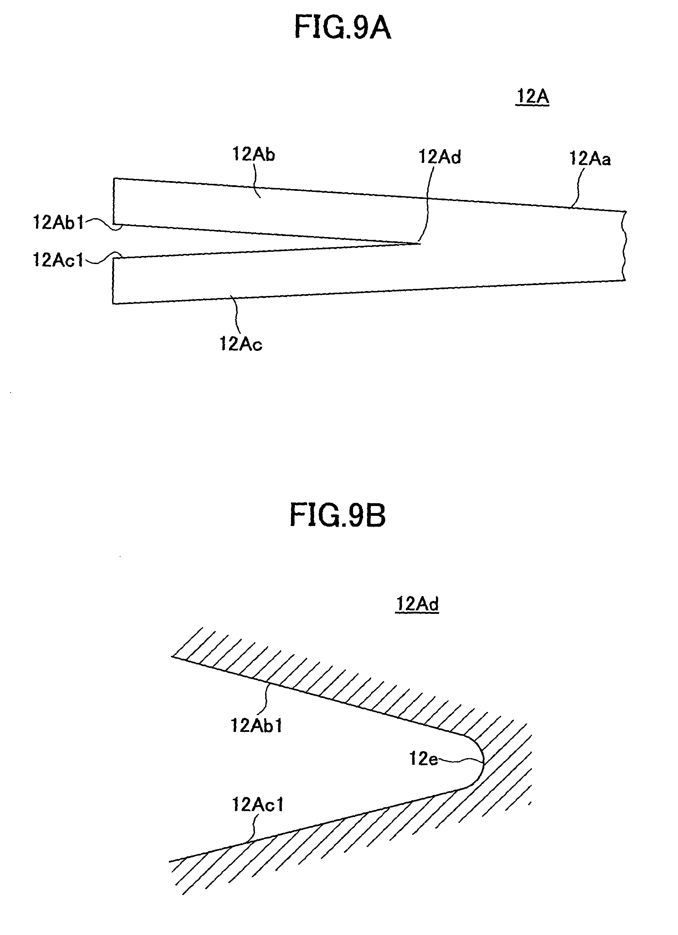

Using the mask member 20A including the above-described exposure mask pattern 22A, the resist mask 12A shown in FIG. 9A is formed. The resist mask 12A includes a main body mask part 12Aa and first and second branch mask parts 12Ab and 12Ac branching off from the main body mask part 12Aa. A branch point part 12Ad of the first and second branch mask parts 12Ab and 12Ac has a shape where an edge part 12Ab1 of the first branch mask part 12Ab and an edge part 12Ac1 of the second branch mask part 12Ac are connected by an arcuate part 12e as shown in FIG. 9B.

As a result of performing RIE on the structure of FIG. 7E where the resist mask 12A is formed, the branch point part 44d of the core 44 has a shape where the inner edges 44b1 and 44c1 of the branch cores 44b and 44c, respectively, are connected by the arcuate part 44e as shown in FIG. 6B.

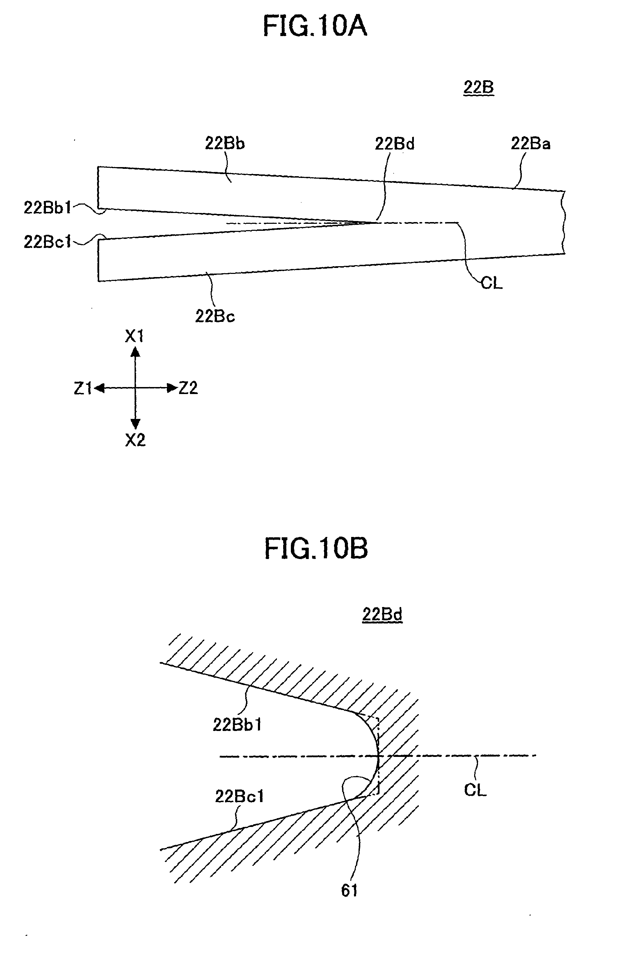

FIGS. 10A through 11B show other exposure mask patterns 22B and 22C according to this embodiment.

The exposure mask pattern 22B of FIG. 10A (a first variation) includes a main body mask part 22Ba and first and second branch mask parts 22Bb and 22Bc branching off from the main body mask part 22Ba. A branch point part 22Bd of the first and second branch mask parts 22Bb and 22Bc has a shape where an arcuate edge part 61 connects an edge part 22Bb1 of the first branch mask part 22Bb and an edge part 22Bc1 of the second branch mask part 22Bc as shown enlarged in FIG. 10B. In FIG. 10B, the shape of the branch point part 22d of FIG. 4B is indicated by two-dot chain lines.

That is, the closed end of the space between the edge parts 22Bb1 and 22Bc1 is defined by the arcuate edge part 61, which is an edge part curved like an arc protruding in a direction toward the main body mask part 22Ba.

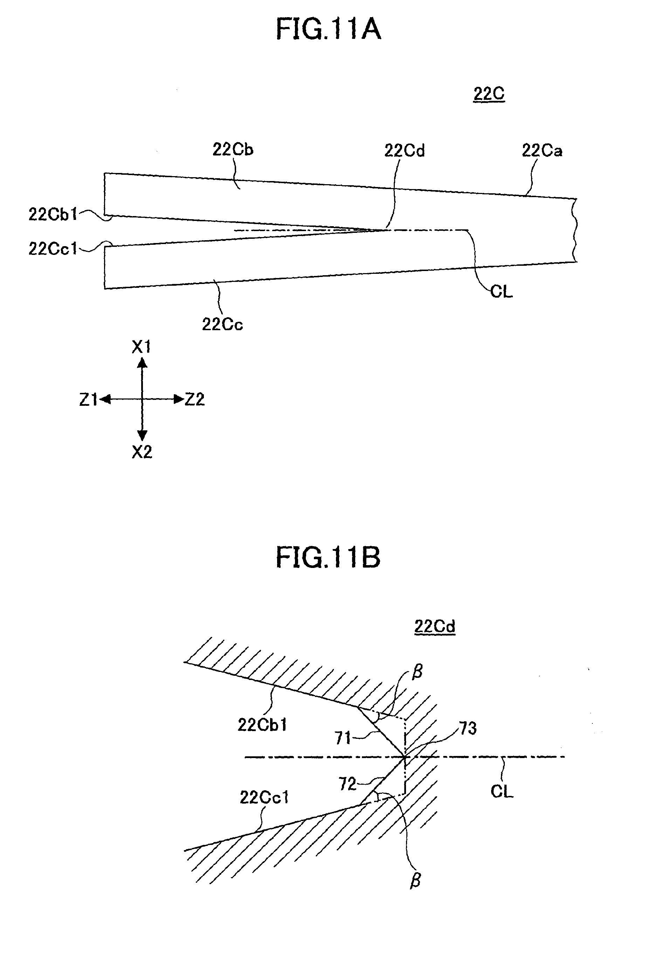

The exposure mask pattern 22C of FIG. 11A (a second variation) includes a main body mask part 22Ca and first and second branch mask parts 22Cb and 22Cc branching off from the main body mask part 22Ca. A branch point part 22Cd of the first and second branch mask parts 22Cb and 22Cc has a shape where linear edge parts 71 and 72 connect an edge part 22Cb1 of the first branch mask part 22Cb and an edge part 22Cc1 of the second branch mask part 22Cc in a triangular manner, or in such a manner as to form a triangular shape therebetween, as shown enlarged in FIG. 11B.

That is, in the branch point part 22Cd, the edge connecting the edge parts 22Cb1 and 22Cc1 is defined by the edge parts 71 and 72, which are connected so as to form a triangular shape that is open in a direction away from the main body mask part 22Ca. In other words, the closed end of the space between the edge parts 22Cb1 and 22Cc1 is defined by the edge parts 71 and 72, which are connected so as to form a triangular shape with a line connecting the connection of the edge parts 22Cb1 and 71 and the connection of the edge parts 22Cc1 and 72, the triangular shape being formed on the main body mask part 22Ca side of the line.

The edge part 71 is inclined clockwise at an angle β to the edge part 22Cb1. The edge part 72 is inclined counterclockwise at the angle β to the edge part 22Cc1. A point 73 at which the edge parts 71 and 72 meet each other corresponds to a point on the edge part 22e of the branch point part 22d of FIG. 4B. In FIG. 11B, the shape of the branch point part 22d shown in FIG. 4B is indicated by two-dot chain lines.

In the case of employing a mask member including any of the above-described exposure mask patterns 22B and 22C, the resist mask 12A of the shape shown in FIGS. 9A and 9B is also formed so that the core 44 of the shape shown in FIGS. 6A and 6B is also formed as in the case of employing the above-described mask member 20A.

The present invention is also applicable to the manufacturing of a device with a branch optical waveguide having a shape other than a Y-letter shape.

Thus, according to the present invention, an exposure mask is employed that includes a main body mask part and first and second branch mask parts branching off therefrom at a branch point part having a shape where three linear edge parts connect the edge part of the first branch mask part and the edge part of the second branch mask part in a trapezoidal manner. The branch point part may alternatively have a shape where an edge part curved like an arc connects the edge part of the first branch mask part and the edge part of the second branch mask part. The branch point part may alternatively have a shape where two linear edge parts connect the edge part of the first branch mask part and the edge part of the second branch mask part in a triangular manner. As a result, it is possible to form a core whose branch point part does not include a substantially elliptic part that is open as if scooped out, and has a shape close to an ideal shape. Accordingly, it is possible to manufacture a branch optical waveguide having the characteristic of reduced radiation loss compared with a conventional one.

The present invention is not limited to the specifically disclosed embodiment, and variations and modifications may be made without departing from the scope of the present invention.

## Claims

1. A method of manufacturing a branch optical waveguide (42), the method forming a resist pattern (12A) by performing exposure using an exposure mask (22A), the method forming a core (44) by performing etching on a layer (10) of a polymer resin material using the resist pattern (12A) as a mask, thereby manufacturing the branch optical waveguide (42), **characterized in that**:
the exposure mask (22A) includes a main body mask part (22Aa) and first and second branch mask parts (22Ab, 22Ac) branching off therefrom at a branch point part (22Ad); and
the branch point part (22Ad) has a shape where first, second, and third linear edge parts (51, 52, 53) connect an edge part (22Ab1) of the first branch mask part (22Ab) and an edge part (22Ac1) of the second branch mask part (22Ac) in a trapezoidal manner.

2. The method as claimed in claim 1, **characterized in that** the first, second, and third linear edge parts are connected so as to form a trapezoidal shape that is open in a direction away from the main body mask part.

3. The method as claimed in claim 1, **characterized in that** the first, second, and third linear edge parts define a closed end of a space between the edge part of the first branch mask part and the edge part of the second branch mask part, the first, second, and third linear edge parts being connected so as to form a trapezoidal shape with a line connecting a connection of the edge part of the first branch mask part and the first linear edge part and the connection of the edge part of the second branch mask part and the second linear edge part, the third linear edge part connecting the first and second linear edge parts.

4. The method as claimed in claim 3, **characterized in that** the trapezoidal shape is formed on a main body mask part side of the line.

5. A method of manufacturing a branch optical waveguide (42), the method forming a resist pattern (12A) by performing exposure using an exposure mask (22B), the method forming a core (44) by performing etching on a layer (10) of a polymer resin material using the resist pattern (12A) as a mask, thereby manufacturing the branch optical waveguide (42), **characterized in that**:
the exposure mask (22B) includes a main body mask part (22Ba) and first and second branch mask parts (22Bb, 22Bc) branching off therefrom at a branch point part (22Bd); and
the branch point part (22Bd) has a shape where an edge part (61) curved like an arc connects an edge part (22Bb1) of the first branch mask part (22Bb) and an edge part (22Bc1) of the second branch mask part (22Bc).

6. The method as claimed in claim 5, **characterized in that** the edge part connecting the edge part of the first branch mask part and the edge part of the second branch mask part is curved like an arc protruding in a direction toward the main body mask part.

7. A method of manufacturing a branch optical waveguide (42), the method forming a resist pattern (12A) by performing exposure using an exposure mask (22C), the method forming a core (44) by performing etching on a layer (10) of a polymer resin material using the resist pattern (12A) as a mask, thereby manufacturing the branch optical waveguide (42), **characterized in that**:
the exposure mask (22C) includes a main body mask part (22Ca) and first and second branch mask parts (22Cb, 22Cc) branching off therefrom at a branch point part (22Cd); and
the branch point part (22Cd) has a shape where first and second linear edge parts (71, 72) connect an edge part (22Cb1) of the first branch mask part (22Cb) and an edge part (22Cc1) of the second branch mask part (22Cc) in a triangular manner.

8. The method as claimed in claim 7, **characterized in that** the first and second linear edge parts are connected so as to form a triangular shape that is open in a direction away from the main body mask part.

9. The method as claimed in claim 7, **characterized in that** the first and second linear edge parts define a closed end of a space between the edge part of the first branch mask part and the edge part of the second branch mask part, the first and second linear edge parts being connected so as to form a triangular shape with a line connecting a connection of the edge part of the first branch mask part and the first linear edge part and the connection of the edge part of the second branch mask part and the second linear edge part.

10. The method as claimed in claim 9, **characterized in that** the triangular shape is formed on a main body mask part side of the line.

11. An exposure mask (22A) used in a process for forming a resist pattern (12A) on an upper surface of a layer (10) of a polymer resin material by exposure, the resist pattern (12A) being used for performing etching on the layer (10) of the polymer resin material so as to form a core (44) including an entrance-side core (44a) and a plurality of branch cores (44b, 44c) branching off therefrom, **characterized by**:
a main body mask part (22Aa); and
first and second branch mask parts (22Ab, 22Ac) branching off from the main body mask part (22Aa) at a branch point part (22Ad),
**characterized in that** the branch point part (22Ad) has a shape where first, second, and third linear edge parts (51, 52, 53) connect an edge part (22Ab1) of the first branch mask part (22Ab) and an edge part (22Ac1) of the second branch mask part (22Ac) in a trapezoidal manner.

12. The exposure mask as claimed in claim 11, **characterized in that** the first, second, and third linear edge parts are connected so as to form a trapezoidal shape that is open in a direction away from the main body mask part.

13. The exposure mask as claimed in claim 11, **characterized in that** the first, second, and third linear edge parts define a closed end of a space between the edge part of the first branch mask part and the edge part of the second branch mask part, the first, second, and third linear edge parts being connected so as to form a trapezoidal shape with a line connecting a connection of the edge part of the first branch mask part and the first linear edge part and the connection of the edge part of the second branch mask part and the second linear edge part, the third linear edge part connecting the first and second linear edge parts.

14. The exposure mask as claimed in claim 13, **characterized in that** the trapezoidal shape is formed on a main body mask part side of the line.

15. An exposure mask (22B) used in a process for forming a resist pattern (12A) on an upper surface of a layer (10) of a polymer resin material by exposure, the resist pattern (12A) being used for performing etching on the layer (10) of the polymer resin material so as to form a core (44) including an entrance-side core (44a) and a plurality of branch cores (44b, 44c) branching off therefrom, the exposure mask (22B) **characterized by**:
a main body mask part (22Ba); and
first and second branch mask parts (22Bb, 22Bc) branching off from the main body mask part (22Ba) at a branch point part (22Bd),
**characterized in that** the branch point part (22Bd) has a shape where an edge part (61) curved like an arc connects an edge part (22Bb1) of the first branch mask part (22Bb) and an edge part (22Bc1) of the second branch mask part (22Bc).

16. The exposure mask as claimed in claim 15, **characterized in that** the edge part connecting the edge part of the first branch mask part and the edge part of the second branch mask part is curved like an arc protruding in a direction toward the main body mask part.

17. An exposure mask (22C) used in a process for forming a resist pattern (12A) on an upper surface of a layer (10) of a polymer resin material by exposure, the resist pattern (12A) being used for performing etching on the layer (10) of the polymer resin material so as to form a core (44) including an entrance-side core (44a) and a plurality of branch cores (44b, 44c) branching off therefrom, the exposure mask (22C) **characterized by**:
a main body mask part (22Ca); and
first and second branch mask parts (22Cb, 22Cc) branching off from the main body mask part (22Ca) at a branch point part (22Cd),
**characterized in that** the branch point part (22Cd) has a shape where first and second linear edge parts (71, 72) connect an edge part (22Cb1) of the first branch mask part (22Cb) and an edge part (22Cc1) of the second branch mask part (22Cc) in a triangular manner.

18. The exposure mask as claimed in claim 17, **characterized in that** the first and second linear edge parts are connected so as to form a triangular shape that is open in a direction away from the main body mask part.

19. The exposure mask as claimed in claim 17, **characterized in that** the first and second linear edge parts define a closed end of a space between the edge part of the first branch mask part and the edge part of the second branch mask part, the first and second linear edge parts being connected so as to form a triangular shape with a line connecting a connection of the edge part of the first branch mask part and the first linear edge part and the connection of the edge part of the second branch mask part and the second linear edge part.

20. The exposure mask as claimed in claim 19, **characterized in that** the triangular shape is formed on a main body mask part side of the line.
